# EUROPEAN PATENT APPLICATION

(11) **EP 3 659 888 A1**
(43) Date of publication of application: **03.06.2020**
(21) Application number: 19208787.2
(22) Date of filing: 13.11.2019
(51) Int. Cl.: B60W 50/00, B60W 40/114, B60W 30/02, B60K 6/52, B60W 30/10

(54) **DRIVING FORCE DISTRIBUTION CONTROL DEVICE**

(30) Priority: 15.11.2018 JP 2018215035
(71) Applicant: JTEKT CORPORATION, Osaka-shi Osaka 542-8502 (JP)
(72) Inventor: TAKAUE, Hiroto, Osaka-shi,, Osaka 542-8502 (JP)
(74) Representative: TBK

(57) **Abstract**

A driving force distribution control device (7) is configured to control driving forces for right (20R) and left (20L) wheels of a vehicle (1). The driving force distribution control device (7) includes an electronic control unit (71) configured to obtain (S2) crosswind information regarding a crosswind to which the vehicle is to be subjected in a predetermined region located ahead in a direction of travel of the vehicle, and to control (S6), in synchronization with arrival of the vehicle at the predetermined region, the driving forces for the right and left wheels based on the crosswind information so as to reduce an influence of the crosswind on traveling of the vehicle.

## Description

### BACKGROUND OF THE INVENTION

### 1. Field of the Invention

The invention relates to a driving force distribution control device that is applied to a four-wheel drive vehicle, and that is configured to control driving forces for front and rear wheels.

### 2. Description of Related Art

There has been proposed a driving force distribution control device which performs right and left wheel driving force distribution control (what is called torque vectoring control). Under the right and left wheel driving force distribution control, the driving forces for the right and left wheels are made different from each other so that a vehicle has a turning behavior corresponding to the driving state (see, for example, Japanese Unexamined Patent Application Publication No. 2012-17053 (JP 2012-17053 A)).

The driving force distribution control device described in JP 2012-17053 A calculates a yaw rate deviation Δφ (= φ - tφ) when an actual turning behavior (actual yaw rate φ) of the vehicle and a target turning behavior (target yaw rate tφ) required by the driver's steering operation do not match due to disturbance such as a crosswind. The driving force distribution control device corrects the total driving force of the rear wheels and the difference between driving forces for the rear wheels based on the yaw rate deviation Δφ.

### SUMMARY OF THE INVENTION

However, the driving force distribution control device in the related art controls the driving forces only after it detects a change in actual yaw rate in a case where a disturbance occurs. Accordingly, the vehicle's behavior becomes unstable at the time when, for example, a crosswind disturbance occurs, which may make the driver feel uneasy.

The invention provides a driving force distribution control device capable of further improving driving stability as compared to the case where the driving forces for right and left wheels are controlled after a change in yaw rate due to a crosswind is detected.

An aspect of the invention relates to a driving force distribution control device configured to control driving forces for right and left wheels of a vehicle. The driving force distribution control device includes an electronic control unit configured to obtain crosswind information regarding a crosswind to which the vehicle is to be subjected in a predetermined region located ahead in a direction of travel of the vehicle, and to control, in synchronization with arrival of the vehicle at the predetermined region, the driving forces for the right and left wheels based on the crosswind information so as to reduce an influence of the crosswind on traveling of the vehicle.

The driving force distribution control device according to the above aspect of the invention improves driving stability as compared to the case where the driving forces are controlled after a change in yaw rate due to a crosswind is detected.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic configuration diagram illustrating an example of a configuration of a four-wheel drive vehicle including a driving force distribution control device according to a first embodiment of the invention;
FIG. 2 is a block diagram illustrating an example of a functional configuration of a control device;
FIG. 3A schematically illustrates the relationship between the crosswind yaw moment generated by a crosswind and the counter yaw moment generated by the difference between driving forces to rear wheels, and FIG. 3B is a side view illustrating the position of a pressure receiving region;
FIGS. 4A and 4B schematically illustrate how the driving forces acting on the rear wheels change between a position before a tunnel exit and a position near the tunnel exit;
FIG. 5 is a flowchart illustrating an example of a process that is executed by a control unit of a control device;
FIG. 6 is a schematic configuration diagram illustrating an example of a configuration of a four-wheel drive vehicle according to a second embodiment; and
FIG. 7 is a schematic configuration diagram illustrating an example of a configuration of a four-wheel drive vehicle according to a third embodiment.

### DETAILED DESCRIPTION OF EMBODIMENTS

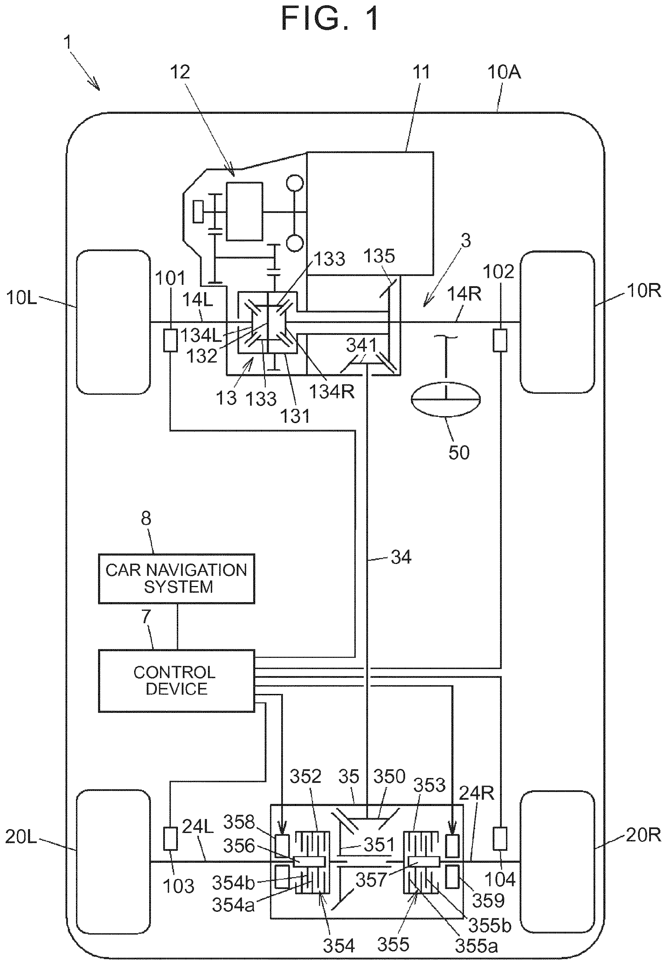

A first embodiment of the invention will be described with reference to FIGS. 1 to 5. Embodiments described below are given as specific examples for carrying out the invention. However, the technical scope of the invention is not limited to the embodiments.

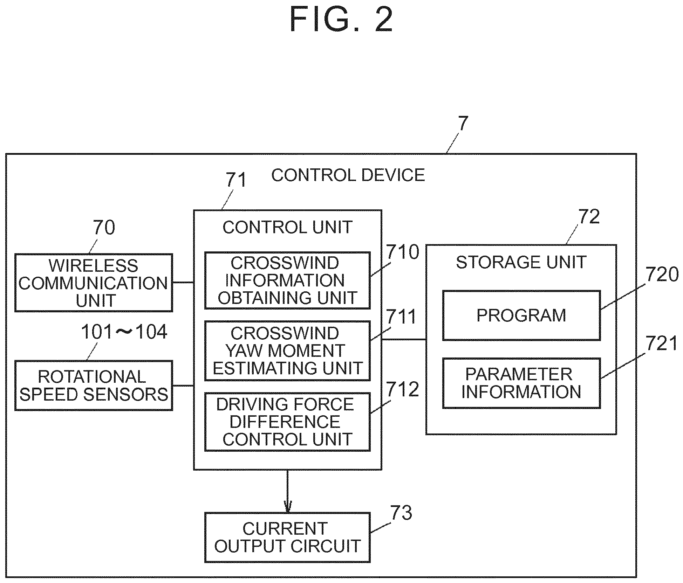

FIG. 1 is a schematic configuration diagram illustrating an example of a configuration of a four-wheel drive vehicle including a driving force distribution control device according to the first embodiment of the invention. FIG. 2 is a block diagram illustrating an example of a functional configuration of a control device.

As shown in FIG. 1, a four-wheel drive vehicle 1 includes a vehicle body 10A, an engine 11 that is a driving source, a transmission 12, right and left front wheels 10R, 10L and right and left rear wheels 20R, 20L, a driving force transmission system 3, a steering wheel 50, a control device 7, and a car navigation system 8. The driving force transmission system 3 transmits an output of the transmission 12 to the front wheels 10R, 10L and the rear wheels 20R, 20L. The steering wheel 50 steers the front wheels 10R, 10L. The control device 7 controls a driving force distribution device 35 of the driving force transmission system 3, etc. The car navigation system 8 provides driving directions. The four-wheel drive vehicle 1 is an example of a vehicle. The control device 7 is an example of a driving force distribution control device. The four-wheel drive vehicle 1 including the control device 7 described below is hereinafter sometimes referred to as the vehicle.

The driving force transmission system 3 includes a front differential 13, front-wheel drive shafts 14R, 14L, a propeller shaft 34, the driving force distribution device 35, and rear-wheel drive shafts 24R, 24L.

The front differential 13 includes a differential case 131, a pinion shaft 132, a pair of pinion gears 133, and a pair of side gears 134R, 134L. The pinion shaft 132 is supported at both ends by the differential case 131. The pinion gears 133 are supported on the pinion shaft 132. The pair of side gears 134R, 134L meshes with the pair of pinion gears 133 such that the axes of the side gears 134R, 134L are perpendicular to the axes of the pinion gears 133. The right and left drive shafts 14R, 14L are coupled to the side gears 134R, 134L such that the drive shafts 14R, 14L are not rotatable relative to the side gears 134R, 134L, respectively.

A ring gear 135 is fixed to the differential case 131. The propeller shaft 34 has a pinion gear 341 on its front end in the longitudinal direction (i.e., the front-rear direction) of the vehicle, and the ring gear 135 meshes with the pinion gear 341.

The driving force distribution device 35 distributes the driving force received from the propeller shaft 34 to the right and left rear wheels 20R, 20L via the rear-wheel drive shafts 24R, 24L. The driving force distribution device 35 includes a pinion gear 350, a ring gear 351, first and second clutch housings 352, 353, first and second multiplate clutches 354, 355, first and second output shafts 356, 357, and first and second actuators 358, 359. The pinion gear 350 rotates with the propeller shaft 34. The ring gear 351 meshes with the pinion gear 350. The first and second clutch housings 352, 353 rotate with the ring gear 351. The first and second multiplate clutches 354, 355 are accommodated in the first and second clutch housings 352, 353, respectively. The driving force is transmitted to the first and second output shafts 356, 357 through the first and second multiplate clutches 354, 355, respectively. The first and second actuators 358, 359 press the first and second multiplate clutches 354, 355, respectively.

The ring gear 351 and the first and second clutch housings 352, 353 are arranged in the lateral direction (i.e., the vehicle width direction) of the vehicle and rotate together about a rotation axis extending in the lateral direction of the vehicle. The driving force is transmitted from the first output shaft 356 and the drive shaft 24L that rotates with the first output shaft 356 to the left rear wheel 20L. The driving force is transmitted from the second output shaft 357 and the drive shaft 24R that rotates with the second output shaft 357 to the right rear wheel 20R.

The first multi-plate clutch 354 includes a plurality of outer clutch plates 354a that rotate with the first clutch housing 352 and a plurality of inner clutch plates 354b that rotate with the first output shaft 356. When receiving a pressing force from the first actuator 358, the outer clutch plates 354a and the inner clutch plates 354b frictionally contact each other to transmit the driving force.

Similarly, the second multi-plate clutch 355 includes a plurality of outer clutch plates 355a that rotate with the second clutch housing 353 and a plurality of inner clutch plates 355b that rotate with the second output shaft 357. When receiving a pressing force from the second actuator 359, the outer clutch plates 355a and the inner clutch plates 355b frictionally contact each other to transmit the driving force.

Each of the first and second actuators 358, 359 includes, for example, a ball cam mechanism that converts a rotational force into an axial pressing force and an electromagnetic clutch mechanism or an electric motor that operates the ball cam mechanism. The first and second actuators 358, 359 press the first and second multiplate clutches 354, 355, respectively, with the pressing force corresponding to the current received from the control device 7. The control device 7 is capable of controlling the driving forces that are distributed to the right and left rear wheels 20R, 20L by increasing or decreasing the current supplied to the first and second actuators 358, 359.

The driving force transmission system 3 configured as described above constantly transmits the output of the transmission 12 to the right and left front wheels 10R, 10L through the front differential 13 and the front-wheel drive shafts 14R, 14L. The driving force transmission system 3 transmits the driving force corresponding to the current supplied to the first actuator 358 to the left rear wheel 20L and transmits the driving force corresponding to the current supplied to the second actuator 359 to the right rear wheel 20R. With this configuration, the control device 7 is capable of controlling the driving force distribution ratio between the front wheels 10R, 10L and the rear wheels 20R, 20L and the driving force distribution ratio between the right rear wheel 20R and the left rear wheel 20L.

As shown in FIG. 2, the control device 7 includes, for example, a wireless communication unit 70, a control unit 71, a storage unit 72, and a current output circuit 73. The wireless communication unit 70 wirelessly communicates with the outside such as an expressway traffic control center. The current output circuit 73 supplies a current to the first and second actuators 358, 359. The control device 7 is configured to receive various detection values including detection values of rotational speed sensors 101 to 104 that detect the rotational speeds of the wheels 10R, 10L, 20R, 20L.

The control unit 71 includes a central processing unit (CPU) and its peripheral circuits. The CPU of the control unit 71 operates according to a program 720 stored in the storage unit 72 to function as a crosswind information obtaining unit 710, a crosswind yaw moment estimating unit 711, a driving force difference control unit 712, etc. In other words, the control unit 71 is an electronic control unit.

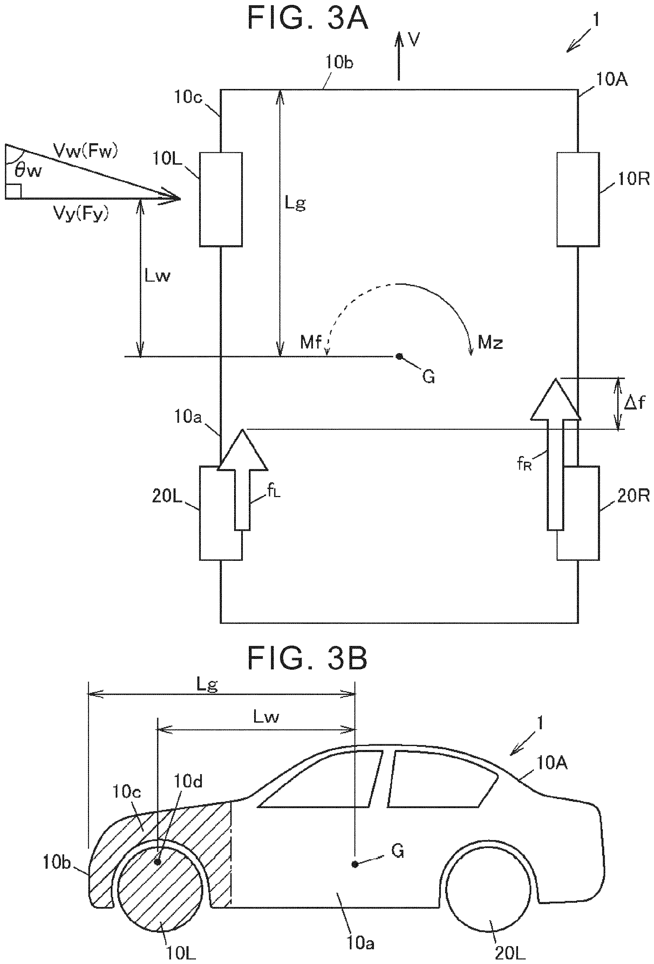

The storage unit 72 includes memory devices such as a read only memory (ROM) and a random access memory (RAM). The storage unit 72 stores various kinds of information such as the program 720 and parameter information 721. The parameter information 721 contains, for example, the pressure receiving area S for a crosswind in the four-wheel drive vehicle 1 and the distances Lw, Lg (see FIGS. 3A and 3B) that will be described later. Such information is used to calculate a crosswind yaw moment Mz.

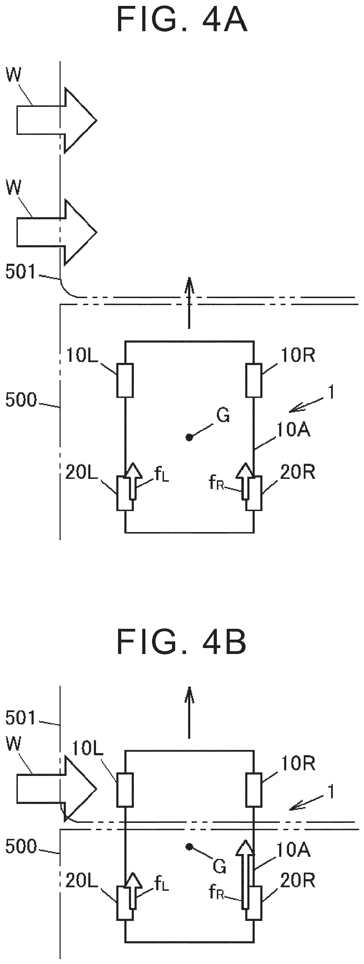

Next, the control process of each of units 710 to 712 of the control unit 71 will be described with reference to FIGS. 3A, 3B and FIGS. 4A, 4B. FIG. 3A schematically illustrates the relationship between the crosswind yaw moment generated by a crosswind and a counter yaw moment generated by a difference between the driving forces applied to the rear wheels 20R, 20L. FIG. 3B is a side view illustrating the position of a pressure receiving region.

When the vehicle moving on a road reaches a communication region located before (behind in the direction of travel) a predetermined region (hereinafter sometimes referred to as the "crosswind caution region") 501 (see FIGS. 4A and 4B), the crosswind information obtaining unit 710 communicates with the outside via the wireless communication unit 70 to obtain crosswind information regarding the nearest crosswind caution region 501 located ahead in the direction of travel. The crosswind information contains, for example, the wind velocity Vw (see FIG. 3A), the direction (azimuth orientation) of the wind, etc. The crosswind caution region 501 herein refers to a region where a crosswind tends to blow. Examples of the crosswind caution region 501 include a region near a tunnel exit, a region over a bridge, and a gap between noise barriers. The communication region is a region where the vehicle can wirelessly communicate with the outside. For example, the communication region may be located near a tunnel entrance or further before the tunnel entrance.

An example of the outside with which the vehicle communicates is the expressway traffic control center. The crosswind information obtaining unit 710 may communicate with the expressway control traffic center to receive intelligent transport system (ITS) information and may obtain crosswind information from the ITS information. The ITS information contains, for example, information regarding an icy road ahead in the direction of travel, crosswind information regarding a region near a tunnel exit, and the presence of a stopped vehicle ahead in the direction of travel. The crosswind information obtaining unit 710 may obtain crosswind information from an anemometer or the car navigation system 8.

In FIGS. 3A and 3B, Vw represents the wind velocity obtained from crosswind information, Vy represents the component of the wind velocity Vw in a direction perpendicular to a side surface 10a of the vehicle body 10A (i.e., lateral wind velocity), θw represents the angle of the direction (azimuth orientation) of the wind with respect to the direction (direction of travel) of the vehicle body 10A (i.e., wind direction angle), Fw represents the wind load, Fy represents the component of the wind load Fw in the direction perpendicular to the side surface 10a of the vehicle body 10A (i.e., lateral wind load), f_{L} represents the driving force for the left rear wheel 20L, f_{R} represents the driving force for the right rear wheel 20R, Δf represents the difference in driving force (|f_{L} - f_{R}|), Mz represents the crosswind yaw moment generated by a crosswind, Mf represents the counter yaw moment generated by the driving force difference Δf, Lg represents the distance from a front surface 10b of the vehicle body 10A to the center of gravity G of the vehicle as the vehicle body 10A is viewed in the lateral direction of the vehicle, and Lw represents the distance from a pressure receiving center 10d, which is the geometric center of the area (i.e., the pressure receiving area) of a pressure receiving region 10c, to the center of gravity G of the vehicle as the vehicle body 10A is viewed in the lateral direction of the vehicle.

When a part of the vehicle body 10A enters the crosswind caution region 501 while the vehicle is moving forward, the predetermined region (hereinafter sometimes referred to as the "pressure receiving region") 10c (hatched region in FIG. 3B) in the front part of the side surface 10a of the vehicle body 10A suddenly receives the wind pressure of a crosswind. The crosswind yaw moment estimating unit 711 estimates the crosswind yaw moment generated when the predetermined pressure receiving region 10c receives the wind pressure of the crosswind as follows.

For example, the crosswind yaw moment estimating unit 711 obtains the direction (direction of travel) of the vehicle from the car navigation system 8. Then, based on the obtained direction (direction of travel) of the vehicle and the direction (azimuth orientation) of the wind contained in the crosswind information, the crosswind yaw moment estimating unit 711 calculates the wind direction angle θw (see FIG. 3A) with respect to the direction of travel of the vehicle. The crosswind yaw moment estimating unit 711 may obtain the wind direction angle θw from the car navigation system 8.

The crosswind yaw moment estimating unit 711 calculates Vwsinθw from the wind direction angle θw and the wind velocity Vw contained in the crosswind information and obtains the lateral wind velocity Vy (see FIG. 3A). The crosswind yaw moment estimating unit 711 calculates the lateral wind load Fy (see FIG. 3A) using the lateral wind velocity Vy, the pressure receiving area S of the pressure receiving region 10c that is contained in the parameter information 721 stored in the storage unit 72, the air density p, etc., and obtains the distance Lw from the parameter information 721 stored in the storage unit 72. The crosswind yaw moment estimating unit 711 calculates Fy-Lw to calculate the crosswind yaw moment Mz (see FIG. 3A).

The driving force difference control unit 712 controls the driving force distribution device 35 in synchronization with the arrival of the vehicle body 10A at the crosswind caution region 501 to generate the counter yaw moment Mf against the crosswind yaw moment Mz generated on the vehicle body 10A by a crosswind.

When it is predicted that a clockwise crosswind yaw moment Mz will be generated, the driving force difference control unit 712 supplies a larger current to the second actuator 359 than to the first actuator 358 to make the driving force f_{R} transmitted to the right rear wheel 20R larger than the driving force f_{L} transmitted to the left rear wheel 20L. The driving force difference control unit 712 thus produces the driving force difference Δf to generate the counter yaw moment Mf by the driving force difference Δf. When it is predicted that a counterclockwise crosswind yaw moment Mz will be generated, the driving force difference control unit 712 supplies a larger current to the first actuator 358 than to the second actuator 359 to make the driving force f_{L} transmitted to the left rear wheel 20L larger than the driving force f_{R} transmitted to the right rear wheel 20R. The driving force difference control unit 712 thus produces the driving force difference Δf to generate the counter yaw moment Mf by the driving force difference Δf.

After the counter yaw moment Mf is generated, the driving force difference control unit 712 detects the vehicle behavior caused by the difference between the crosswind yaw moment Mz and the counter yaw moment Mf using, for example, a yaw rate sensor and corrects the driving forces f_{R}, f_{L} that are transmitted to the right rear wheel 20R and/or the left rear wheel 20L so as to achieve a target vehicle behavior corresponding to the steering operation (i.e., such that the vehicle behavior becomes a target vehicle behavior corresponding to the steering operation). The vehicle behavior may be detected based on (i.e., determined from) wheel speeds of the front wheels 10R, 10L and the rear wheels 20R, 20L.

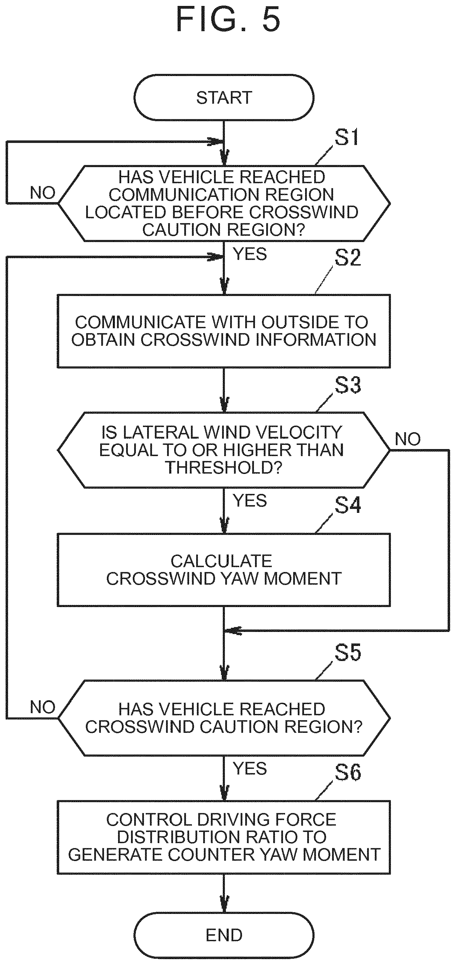

Operation of the present embodiment will be described. An example of a process that is executed by the control unit 71 of the control device 7 will be described with reference to FIG. 5. FIG. 5 is a flowchart illustrating an example of the process that is executed by the control unit 71 of the control device 7.

The crosswind information obtaining unit 710 determines whether the vehicle body 10A has reached a communication region located before the crosswind caution region 501 (S1). It is herein assumed that the crosswind caution region 501 is set near the exit of a tunnel 500, and the communication region is set before the tunnel 500.

When the crosswind information obtaining unit 710 determines that the vehicle body 10A has reached the communication region (S1: Yes), the crosswind information obtaining unit 710 communicates with the outside to obtain crosswind information (S2).

As shown in FIG. 4A, the driving force f_{R} that is transmitted to the right rear wheel 20R and the driving force f_{L} that is transmitted to the left rear wheel 20L are equal to each other when the vehicle has passed the communication region and has not reached the crosswind caution region 501, for example, when the vehicle is located immediately before the exit of the tunnel 500.

The crosswind yaw moment estimating unit 711 determines whether the lateral wind velocity Vy (see FIG. 3A) is equal to or higher than a threshold (S3). The crosswind yaw moment estimating unit 711 obtains the direction (direction of travel) of the vehicle from the car navigation system 8, calculates the wind direction angle θw (see FIG. 3A) from the direction (direction of travel) of the vehicle and the direction (azimuth orientation) of the wind contained in the crosswind information, and obtains the lateral wind velocity Vy from the wind velocity Vw contained in the crosswind information and the wind direction angle θw.

Next, when the lateral wind velocity Vy is equal to or higher than the threshold (S3: Yes), the crosswind yaw moment estimating unit 711 calculates the lateral wind load Fy (see FIG. 3A) and calculates the crosswind yaw moment Mz (FIG. 3A) (S4).

The driving force difference control unit 712 determines whether the vehicle has reached the crosswind caution region 501 (S5). For example, the driving force difference control unit 712 can determine whether the vehicle has reached the crosswind caution region 501 by obtaining the position of the vehicle from the car navigation system 8. When the vehicle has not reached the crosswind caution region 501, the control unit 71 repeats the process of step S2 and the subsequent steps.

When the driving force difference control unit 712 determines that the vehicle has reached the crosswind caution region 501 as shown in FIG. 4B (S5: Yes), the driving force difference control unit 712 controls the driving force distribution device 35 in synchronization with the arrival of the vehicle at the crosswind caution region 501 so as to reduce the influence (i.e., impact) of a crosswind on traveling of the four-wheel drive vehicle 1. The driving force difference control unit 712 thus generates the counter yaw moment Mf against the crosswind yaw moment Mz generated on the vehicle body 10A by a crosswind (S6).

In the case shown in FIG. 4A, the driving force difference control unit 712 supplies a larger current to the second actuator 359 than to the first actuator 358 to make the driving force f_{R} transmitted to the right rear wheel 20R larger than the driving force f_{L} transmitted to the left rear wheel 20L. The driving force difference control unit 712 thus produces the driving force difference Δf to generate the counter yaw moment Mf by the driving force difference Δf.

Functions and effects of the first embodiment will be described. According to the first embodiment described above, the crosswind yaw moment is estimated before the vehicle reaches the crosswind caution region 501, and the driving force distribution device 35 is controlled so as to generate the counter yaw moment against the crosswind yaw moment. This configuration improves driving stability as compared to the case where the driving forces are controlled after the yaw rate resulting from a crosswind is detected when the four-wheel drive vehicle 1 is subjected to the crosswind while moving.

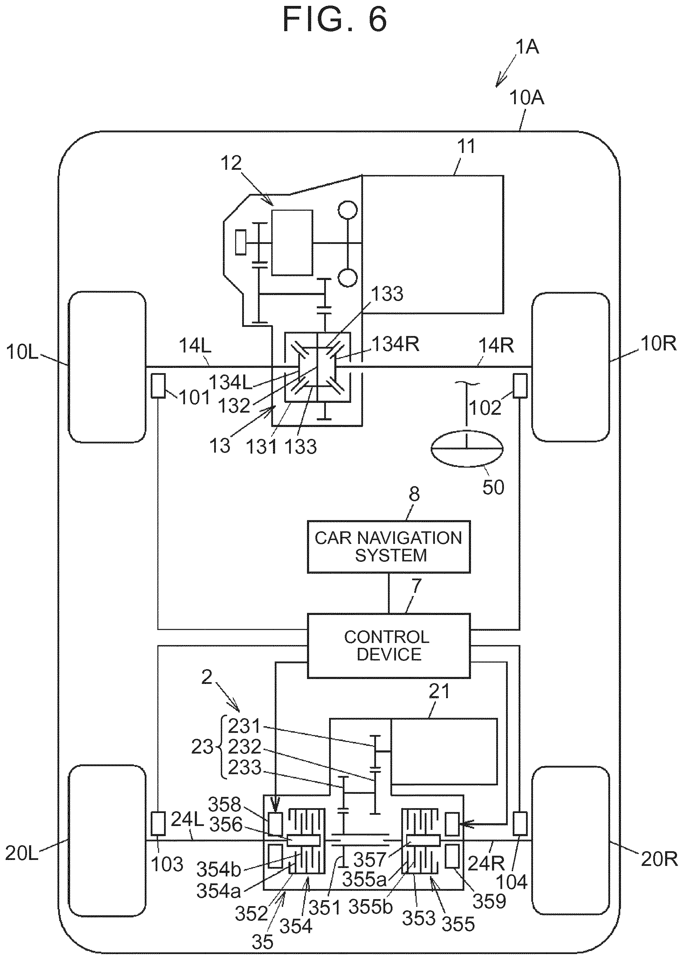

FIG. 6 is a schematic configuration diagram illustrating an example of a configuration of a four-wheel drive vehicle 1A according to a second embodiment of the invention. In FIG. 6, the same components as those described in the first embodiment are denoted with the same reference characters as those used in FIG. 1, and repetitive description will be omitted.

In the first embodiment, the driving force generated by the engine 11 is distributed to the front wheels 10R, 10L and the rear wheels 20R, 20L. In the second embodiment, the front wheels 10R, 10L are driven by the driving force generated by the engine 11 as in the first embodiment, and the rear wheels 20R, 20L are driven by an electric motor 21 of an auxiliary drive device 2.

As in the first embodiment, the rotational speed of the output from the engine 11 is changed by the transmission 12 and then the driving force of the engine 11 is differentially distributed to the right and left drive shafts 14R, 14L through the front differential 13.

The rotational speed of the output from the electric motor 21 of the auxiliary drive device 2 is reduced by a reduction gear mechanism 23 and then the driving force of the electric motor 21 is transmitted to the driving force distribution device 35 having a configuration similar to that of the first embodiment.

The reduction gear mechanism 23 includes a pinion gear 231 fixed to a shaft of the electric motor 21, a large-diameter gear portion 232 meshing with the pinion gear 231, and a small-diameter gear portion 233 meshing with the ring gear 351 of the driving force distribution device 35. The large-diameter gear portion 232 and the small-diameter gear portion 233 are coupled so as not to be rotatable relative to each other.

Functions and effects of the second embodiment will be described. According to the second embodiment described above, as in the first embodiment, the crosswind yaw moment is estimated before the vehicle reaches the crosswind caution region 501, and the driving force distribution device 35 is controlled so as to generate the counter yaw moment against the crosswind yaw moment. This configuration improves driving stability as compared to the case where the driving forces are controlled after the yaw rate resulting from a crosswind is detected when the four-wheel drive vehicle 1A is subjected to the crosswind.

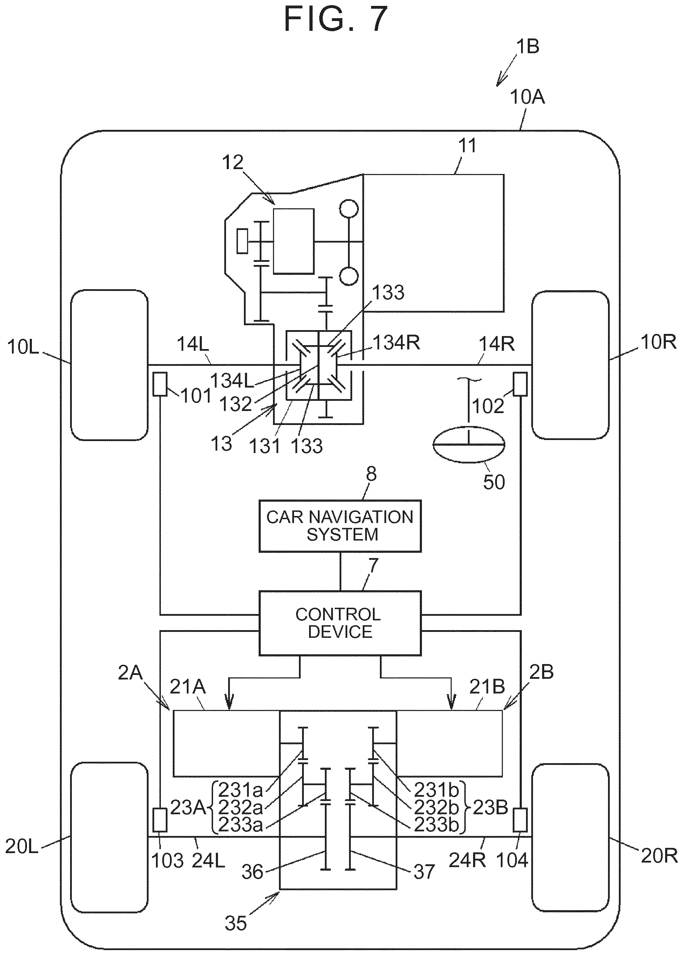

FIG. 7 is a schematic configuration diagram illustrating an example of a configuration of a four-wheel drive vehicle 1B according to a third embodiment of the invention. In FIG. 7, the same components as those described in the first embodiment are denoted with the same reference characters as those used in FIG. 1, and repetitive description will be omitted.

In the first embodiment, the driving force generated by the engine 11 is distributed to the front wheels 10R, 10L and the rear wheels 20R, 20L. In the third embodiment, the front wheels 10R, 10L are driven by the driving force generated by the engine 11 as in the first embodiment, the left rear wheel 20L is driven by an electric motor 21A of a first auxiliary drive device 2A, and the right rear wheel 20R is driven by an electric motor 21B of a second auxiliary drive device 2B.

The rotational speed of the output from the electric motor 21A of the first auxiliary drive device 2A is reduced by a reduction gear mechanism 23A, and then the driving force of the electric motor 21A is transmitted to the rear-wheel drive shaft 24L via a gear 36 provided on the end of the rear-wheel drive shaft 24L. The rotational speed of the output from the electric motor 21B of the second auxiliary drive device 2B is reduced by a reduction gear mechanism 23B, and then the driving force of the electric motor 21B is transmitted to the rear-wheel drive shaft 24R via a gear 37 provided on the end of the rear-wheel drive shaft 24R.

The reduction gear mechanism 23A of the first auxiliary drive device 2A includes a pinion gear 231a fixed to a shaft of the electric motor 21A, a large-diameter gear portion 232a meshing with the pinion gear 231a, and a small-diameter gear portion 233a meshing with the gear 36. The large-diameter gear portion 232a and the small-diameter gear portion 233a are coupled so as not to be rotatable relative to each other. The reduction gear mechanism 23B of the second auxiliary drive device 2B includes a pinion gear 231b fixed to a shaft of the electric motor 21B, a large-diameter gear portion 232b meshing with the pinion gear 231b, and a small-diameter gear portion 233b meshing with the gear 37. The large-diameter gear portion 232b and the small-diameter gear portion 233b are coupled so as not to be rotatable relative to each other. In the present embodiment, the first auxiliary drive device 2A, the second auxiliary drive device 2B, and the gears 36, 37 form the driving force distribution device 35.

As in the first embodiment, the driving force difference control unit 712 of the present embodiment controls the driving force distribution device 35 when the vehicle reaches the crosswind caution region 501 to generate the counter yaw moment Mf against the crosswind yaw moment Mz generated on the vehicle body 10A by a crosswind.

When it is predicted that a clockwise crosswind yaw moment Mz will be generated, the driving force difference control unit 712 supplies a larger current to the electric motor 21B of the second auxiliary drive device 2B than to the electric motor 21A of the first auxiliary drive device 2A to make the driving force f_{R} transmitted to the right rear wheel 20R larger than the driving force f_{L} transmitted to the left rear wheel 20L. The driving force difference control unit 712 thus produces the driving force difference Δf to generate the counter yaw moment Mf by the driving force difference Δf. When it is predicted that a counterclockwise crosswind yaw moment Mz will be generated, the driving force difference control unit 712 supplies a larger current to the electric motor 21A of the first auxiliary drive device 2A than to the electric motor 21B of the second auxiliary drive device 2B to make the driving force f_{L} transmitted to the left rear wheel 20L larger than the driving force f_{R} transmitted to the right rear wheel 20R. The driving force difference control unit 712 thus produces the driving force difference Δf to generate the counter yaw moment Mf by the driving force difference Δf.

After the counter yaw moment Mf is generated, the driving force difference control unit 712 detects the vehicle behavior caused by the difference between the crosswind yaw moment Mz and the counter yaw moment Mf using, for example, a yaw rate sensor and corrects the driving forces f_{R}, f_{L} transmitted to the right rear wheel 20R and/or the left rear wheel 20L so as to achieve a target vehicle behavior corresponding to the steering operation (i.e., the vehicle behavior becomes a target vehicle behavior corresponding to the steering operation). The vehicle behavior may be detected based on (i.e., determined from) wheel speeds of the front wheels 10R, 10L and the rear wheels 20R, 20L.

Functions and effects of the third embodiment will be described. According to the third embodiment described above, the crosswind yaw moment is estimated before the vehicle reaches the crosswind caution region 501, and the first auxiliary drive device 2A and the second auxiliary drive device 2B are controlled so as to generate the counter yaw moment against the crosswind yaw moment. This configuration improves driving stability as compared to the case where the driving forces are controlled after the yaw rate resulting from a crosswind is detected when the four-wheel drive vehicle 1B is subjected to the crosswind while moving.

The invention is described based on the embodiments. However, these embodiments are not intended to limit the scope of the invention.

The invention may be modified as appropriate without departing from the scope of the invention. For example, the crosswind information obtaining unit 710 may obtain the speed of the vehicle, information regarding the current position of the vehicle, and information regarding the measurement position at which a crosswind is measured, and the driving force difference control unit 712 may estimate the time at which the vehicle reaches the measurement position and control the driving forces so as to reduce the influence of the crosswind at the estimated time.

In each of the above embodiments, the counter yaw moment is generated by the difference between the driving forces transmitted to the rear wheels 20R, 20L. However, the counter yaw moment may be generated by the difference between the driving forces transmitted to the front wheels 10R, 10L.

A driving force distribution control device is configured to control driving forces for right and left wheels of a vehicle. The driving force distribution control device includes an electronic control unit (71) configured to obtain crosswind information regarding a crosswind to which the vehicle is to be subjected in a predetermined region located ahead in a direction of travel of the vehicle, and to control, in synchronization with arrival of the vehicle at the predetermined region, the driving forces for the right and left wheels based on the crosswind information so as to reduce an influence of the crosswind on traveling of the vehicle.

## Claims

1. A driving force distribution control device configured to control driving forces for right and left wheels of a vehicle, the driving force distribution control device being **characterized by** comprising
an electronic control unit (71) configured to obtain crosswind information regarding a crosswind to which the vehicle is to be subjected in a predetermined region located ahead in a direction of travel of the vehicle, and to control, in synchronization with arrival of the vehicle at the predetermined region, the driving forces for the right and left wheels based on the crosswind information so as to reduce an influence of the crosswind on traveling of the vehicle.

2. The driving force distribution control device according to claim 1, wherein:
the crosswind information contains a wind velocity and a wind direction;
the electronic control unit (71) is configured to estimate, based on the crosswind information, a crosswind yaw moment to be generated on a vehicle body of the vehicle by the crosswind; and
the electronic control unit (71) is configured to control driving of the right and left wheels in synchronization with the arrival of the vehicle at the predetermined region to generate a counter yaw moment against the crosswind yaw moment.

3. The driving force distribution control device according to claim 2, wherein the electronic control unit (71) is configured to estimate the crosswind yaw moment based on a pressure receiving area of a pressure receiving region to be subjected to the crosswind and a distance from a pressure receiving center of the pressure receiving region to a center of gravity of the vehicle, the pressure receiving region being a region of a side surface of the vehicle body that is located ahead of the center of gravity of the vehicle, and the pressure receiving area of the pressure receiving region and the distance being set for each vehicle model.

4. The driving force distribution control device according to any one of claims 1 to 3, wherein:
the electronic control unit (71) is configured to obtain a speed of the vehicle, information regarding a current position of the vehicle, and information on a measurement position at which the crosswind is measured; and
the electronic control unit (71) is configured to estimate a time at which the vehicle reaches the measurement position, and to control the driving forces for the right and left wheels at the estimated time.

5. The driving force distribution control device according to any one of claims 1 to 4, wherein:
the electronic control unit (71) is configured to determine a vehicle behavior from a yaw rate or wheel speeds; and
the electronic control unit (71) is configured to control the driving forces for the right and left wheels to generate a counter yaw moment, and then control the driving forces for the right and left wheels such that the vehicle behavior becomes a vehicle behavior corresponding to a steering operation.
